# EUROPEAN PATENT APPLICATION

(11) **EP 3 869 019 A1**
(43) Date of publication of application: **25.08.2021**
(21) Application number: 21155643.6
(22) Date of filing: 05.02.2021
(51) Int. Cl.: F01N 13/08, F23L 17/08

(54) **EXHAUST PLUME CONTROL STRUCTURE AND POWER GENERATING PLANT INCLUDING SAME**

(30) Priority: 24.02.2020 US 202016798506
(71) Applicant: General Electric Company, Schenectady, NY 12345 (US)
(72) Inventor: MERCHANT, Laxmikant, 560066 Bangalore (IN); GIRI, Sheo Narain, 560066 Bangalore (IN)
(74) Representative: Openshaw & Co.

(57) **Abstract**

An exhaust plume control structure (210) includes a mounting member (220) configured to mount to an exhaust flow source (212). At least one divider member (240) operatively couples to the mounting member (220) and is positioned in fluid communication with the exhaust flow source (212). A diverter member (260) operatively couples to the divider member(s) (240) to radially direct an initial exhaust flow (92) from the exhaust plume towards the divider member(s) (240). Each divider member (240) separates the initial exhaust flow (92) into a plurality of exhaust flows (242, 282). A number of peripherally spaced, radially extending vanes (280, 282) may also separate the exhaust flows (242, 282) into additional exhaust flows (242, 282). Each of the additional exhaust flows (242, 282) has a slower velocity than the initial exhaust flow (92). The structure (110) reduces exhaust flow velocity and may provide back pressure to the initial exhaust flow (92). A power generating plant (94) including the structure (110) is also disclosed.

## Description

### BACKGROUND

The disclosure relates generally to industrial machine exhaust plume control and, more particularly, to a structure for controlling an exhaust plume in, for example, a power generating plant.

A wide variety of industrial machines create exhaust that is distributed to the atmosphere. For example, ground based power generating systems create exhaust that is directed into the atmosphere by a stack, i.e., a chimney, that directs and cools the exhaust prior to allowing it to escape to the environment. Certain agencies may promulgate environmental or safety laws and/or regulations that present operational limitations relative to a system's exhaust plume. For example, where a power generating system is located near an airport, government laws or regulations may limit exhaust stack plume velocity at lower altitudes for safety purposes. The Australian Civil Aviation Safety Authority (CASA), for example, requires exhaust stack plume velocity to be less than 6.1 meters/second (m/s) at an altitude of 380 meters. Mechanisms to control exhaust stack plume velocity typically require controlling upstream, internal operating parameters that negatively impact the power generating system's performance.

### BRIEF DESCRIPTION

A first aspect of the disclosure provides an exhaust plume control structure, comprising: a mounting member configured to mount to an exhaust flow source; at least one divider member operatively coupled to the mounting member and positioned in fluid communication with an initial exhaust flow exiting from the exhaust flow source; and a diverter member operatively coupled relative to the at least one divider member to radially direct at least a portion of the initial exhaust flow exiting from the exhaust flow source radially towards the at least one divider member, each divider member separating the initial exhaust flow into a plurality of exhaust flows; and a plurality of peripherally spaced, radially extending vanes positioned to separate each of the plurality of exhaust flows into a plurality of additional exhaust flows, each of the plurality of additional exhaust flows having a slower velocity than the initial exhaust flow.

A second aspect of the disclosure provides a power generating plant, including: a power generating system, the power generating system creating an initial exhaust flow; a stack configured to direct the initial exhaust flow to the atmosphere; and an exhaust plume control structure, including: a mounting member configured to mount to the stack; at least one divider member operatively coupled to the mounting member and positioned in fluid communication with the initial exhaust flow from the stack; and a diverter member operatively coupled relative to the at least one divider member to radially direct at least a portion of the initial exhaust flow exiting from the stack radially towards the at least one divider member, each divider member separating the initial exhaust flow into a plurality of exhaust flows; and a plurality of peripherally spaced, radially extending vanes positioned to separate each of the plurality of exhaust flows into a plurality of additional exhaust flows, each of the plurality of additional exhaust flows having a slower velocity than the initial exhaust flow.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of an illustrative industrial machine in which an exhaust plume control structure according to embodiments of the disclosure may be employed.
FIG. 2 shows a solid perspective view of an exhaust plume control structure, according to embodiments of the disclosure.
FIG. 3 shows a transparent perspective view of an exhaust plume control structure, according to embodiments of the disclosure.
FIG. 4 shows a side, partial cross-sectional view of an exhaust plume control structure, according to embodiments of the disclosure.
FIG. 5 shows a solid perspective view of an exhaust plume control structure, according to other embodiments of the disclosure.
FIG. 6 shows a solid perspective view of an exhaust plume control structure, according to yet other embodiments of the disclosure.
FIG. 7 shows a solid perspective view of an exhaust plume control structure, according to more embodiments of the disclosure.
FIG. 8 shows a solid perspective view of an exhaust plume control structure, according to additional embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the current technology, it will become necessary to select certain terminology when referring to and describing relevant machine components within an industrial machine. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as an exhaust flow from an exhaust flow source, e.g., an exhaust stack. The term "downstream" corresponds to the direction of flow of the fluid, and the term "upstream" refers to the direction opposite to the flow (i.e., the direction from which the flow originates).

It is often required to describe parts that are disposed at differing radial positions with regard to a center axis. The term "radial" refers to movement or position perpendicular to an axis. For example, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to the axis. Finally, the term "circumferential" refers to movement or position around the axis. In this disclosure, it will be appreciated that such terms may be applied in relation to a center axis of an exhaust flow source, e.g., a stack.

In addition, several descriptive terms may be used regularly herein, as described below. The terms "first," "second," and "third" may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Where an element or layer is referred to as being "on," "engaged to," "connected to" or "coupled to" another element or layer, it may be directly on, engaged to, connected to, or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

As indicated above, the disclosure provides an exhaust plume control structure. The structure may include a mounting member configured to mount to an exhaust flow source such as a stack (smoke stack) of an industrial machine that creates exhaust. At least one divider member operatively couples to the mounting member and is positioned in fluid communication with the initial exhaust flow from the exhaust flow source. A diverter member operatively couples relative to the divider member(s) to radially direct at least a portion of the initial exhaust flow towards the divider member(s). Each divider member separates the initial exhaust flow into a plurality of exhaust flows. A number of peripherally spaced, radially extending vanes may also separate the exhaust flows into additional exhaust flows. Each of the additional exhaust flows has a slower velocity than the initial exhaust flow. The structure reduces exhaust flow velocity and may provide back pressure to the initial exhaust flow. A power generating plant including the structure is also disclosed.

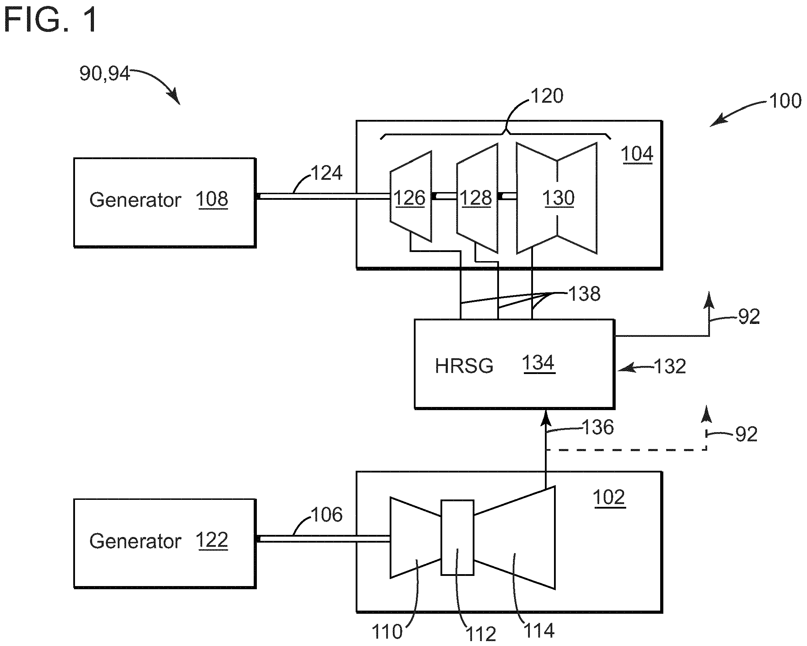

Turning to FIG. 1, a schematic view of portions of an illustrative industrial machine 90 that generates an initial exhaust flow 92, e.g., via a combustion reaction, is illustrated. The disclosure will be described relative to a power generating plant 94. It is emphasized and will be apparent that the teachings of the disclosure are applicable to any industrial machine 90 that generates initial exhaust flow 92, e.g., any combustion system. Power generating plant 94 can take any now known or later developed form. In one example, the power generating plant 94 may include a power generating system 100 in the form of a combined cycle power plant (CCPP), as shown in FIG. 1. In the instant example, the CCPP is a multiple shaft system with two generators, but one with skill in the art will readily understand that the teachings of the disclosure are applicable to any variety of CCPPs. The CCPP may include a gas turbine system 102 and a steam turbine system 104.

Gas turbine system 102 may be mechanically coupled by a shaft 106 to a first generator 108, which generates electrical energy. Gas turbine system 102 may include a compressor 110 and a combustor 112. Gas turbine system 102 also includes gas turbine 114 coupled to common compressor/turbine shaft 106. In one embodiment, gas turbine system 102 is a 7HA.03 engine, commercially available from General Electric Company, Greenville, S.C. The present disclosure is not limited to any one particular GT system and may be implanted in connection with other engines including, for example, the other HA, F, B, LM, GT, TM and E-class engine models of General Electric Company and engine models of other companies.

In operation, air enters the inlet of compressor 110, is compressed and then discharged to combustor 112 where gaseous fuel (e.g., natural gas) and/or liquid fuel (e.g., oil) is burned to provide high energy combustion gases that drive gas turbine 114. In gas turbine 114, the energy of the hot gases is converted into work, some of which is used to drive compressor 110 through rotating shaft 106, with the remainder available for useful work to drive a load such as first generator 108 via shaft 106 for producing electricity.

Steam turbine system 104 includes a steam turbine 120 that is operably coupled to another generator 122 through shaft 124. Steam turbine system 104 may include one or more steam turbines, e.g., as shown, a high pressure (HP) turbine 126, an intermediate pressure (IP) turbine 128 and a low pressure (LP) turbine 130, each of which are coupled to shaft 124. Each steam turbine 126, 128, 130 includes a plurality of rotating blades (not shown) mechanically coupled to shaft 124.

The CCPP may also include a steam source 132, which may be include a heat recovery steam generator (HRSG) 134 operably connected to gas turbine system 102 and steam turbine system 104. As understood, exhaust 136 from gas turbine system 102 is used by HRSG 134 to create steam flow(s) 138 for use by steam turbine system 104. HRSG 134 may include a conventional HRSG configuration, such as those used in conventional CCPPs, and/or may be embodied as another type of heat exchanger or similar component for using exhaust energy to produce steam.

In operation, steam from steam source 132 (e.g., HRSG 134 and perhaps other sources) enters an inlet of HP turbine 126, IP turbine 128 and/or LP turbine 130 and is channeled to impart a force on blades thereof causing shaft 124 to rotate. As understood, steam from an upstream turbine may be employed later in a downstream turbine. The steam thus produced by steam source 132 drives at least a part of steam turbine system 104 in which additional work is extracted to drive shaft 124 and an additional load such as second generator 122 which, in turn, produces additional electric power. It is understood that generators 108, 122 and shafts 106, 124 may be of any size or type known in the art and may differ depending upon their application or the system to which they are connected. Common numbering of the generators and shafts is for clarity and does not necessarily suggest these generators or shafts are identical.

While power generating plant 94 has been described as having power generating system 100 as a CCPP, it is understood that power generating plant 94 may include power generating system 100 as a single cycle power plant, e.g., including only GT system 102 creating initial exhaust flow 92 (in dashed lines). As understood in the field, exhaust from power generating system 100 may exit GT system 102 and/or HRSG 134 as initial exhaust flow 92.

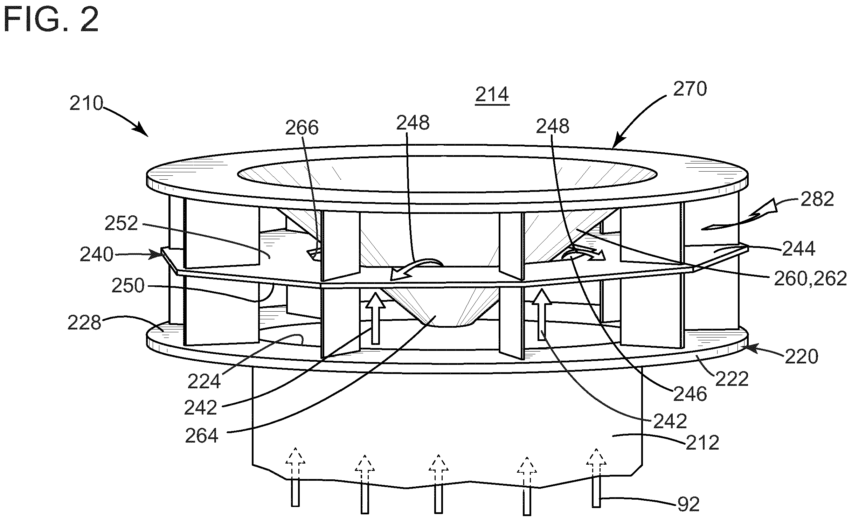

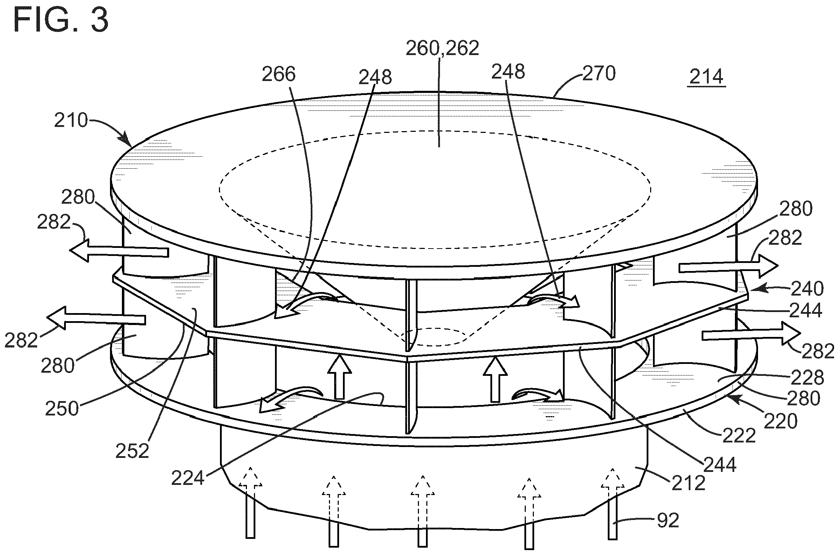

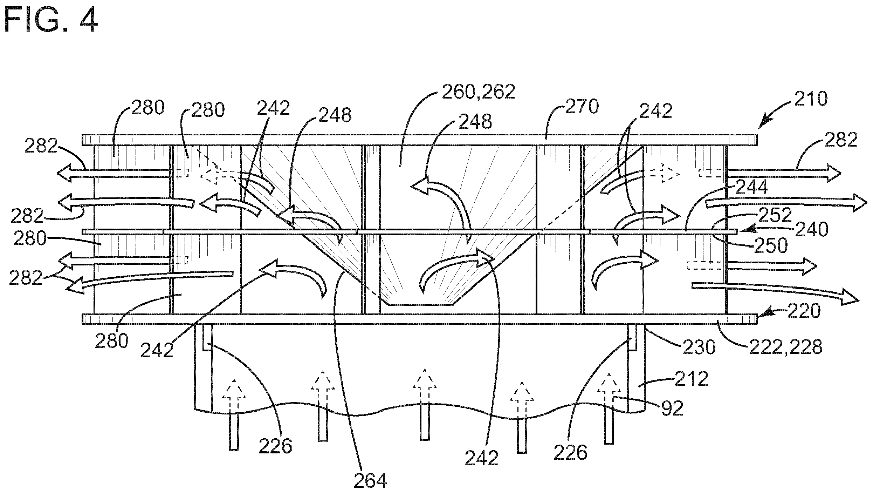

Referring to FIGS. 2-4, FIG. 2 shows a solid perspective view, FIG. 3 shows a transparent perspective view, and FIG. 4 shows a side, partial cross-sectional view of an exhaust plume control structure 210, according to embodiments of the disclosure. As used herein, "exhaust plume" is any gas containing pollutants released from a point source, i.e., an exhaust flow source 212 such as a stack fluidly coupled to a combustion reaction in, for example, an industrial machine such as power generating plant 94 (FIG. 1). Exhaust flow source 212 may include any form of stack, i.e., a chimney, directing and/or cooling initial exhaust flow 92, prior to allowing it to escape to atmosphere 214. As illustrated, initial exhaust flow 92 has an exit direction that is generally parallel to a longitudinal extent of exhaust flow source 212, e.g., substantially vertical. In one non-limiting example, initial exhaust flow 92 may have a relatively high temperature, e.g., >400° Celsius (°C), and a relatively high exit velocity, e.g., > 5 meters/second. Without structure 210, exhaust flow source 212 would emit initial exhaust flow 92 directly to atmosphere 214.

Exhaust plume control structure 210 (hereinafter "structure 210") may include a mounting member 220 configured to couple structure 210 to exhaust flow source 212. As shown best in FIG. 3, mounting member 220 may include a base member 222 having an opening 224 therein, and as shown best in FIG. 4, a mounting extension 226 extending from base member 222. Mounting extension 226 is configured for coupling structure 210 to exhaust flow source 212. To this end, mounting extension 226 may include any now known or later developed element to couple to an end 230 (FIG. 4) of exhaust flow source 212, i.e., depending on the form of end 230 of exhaust flow source 212. In one non-limiting example, exhaust flow source 212 may include a large pipe, e.g., of brick or steel, and end 230 may be an outlet end of the large pipe. In this example, as shown in FIG. 4, mounting extension 226 may include, for example, a collar configured to mate within or couple to end 230. Any form of fastener (not shown) may be used to secure mounting member 220 to exhaust flow source 212.

Base member 222 may be coupled to mounting extension 226 and may be configured to support the rest of structure 210. Base member 222 may include, for example, a circular plate 228 with opening 224 therein. Circular plate 228 may be a single piece of material or a number of sections coupled together. In terms of the latter structure, each base member 222 may include a plurality of plate sections that collectively define opening 224, similar to that shown by the polygonal outer edges of a divider member 240 in FIGS. 2 and 3.

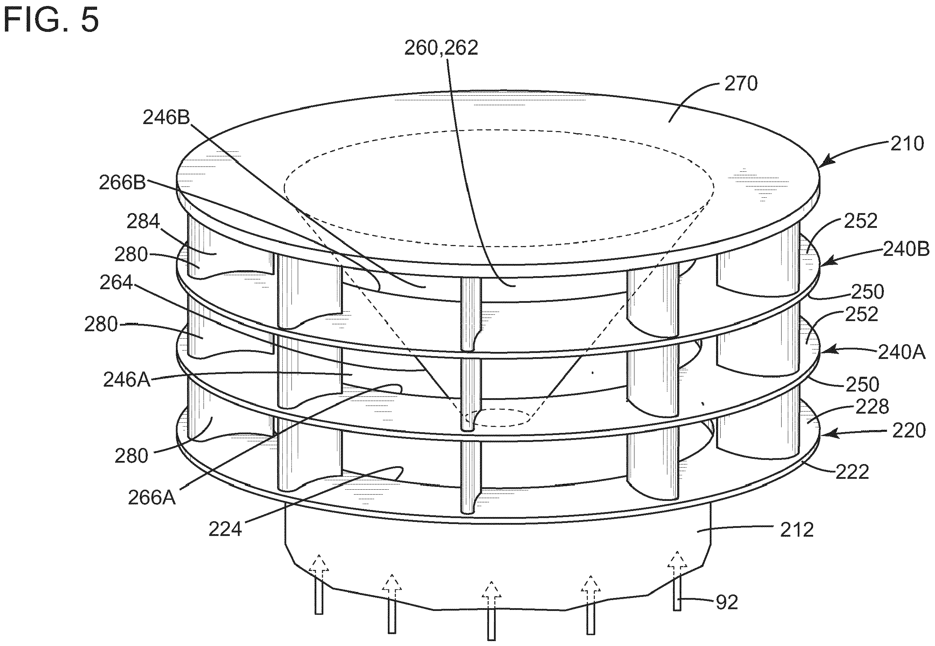

Structure 210 may also include at least one divider member 240 operatively coupled to mounting member 220 and positioned in fluid communication with initial exhaust flow 92 exiting from exhaust flow source 212. In FIGS. 2-4, one divider member 240 is shown, and in FIG. 5, multiple divider members 240A, 240B are shown. More than two divider members 240 may also be employed. Each divider member 240 separates initial exhaust flow 92 into a plurality of exhaust flows 242. As shown best in FIG. 4, as initial exhaust flow 92 encounters divider member(s) 240 and is separated into exhaust flows 242, exhaust flows 242 may pass under a lower surface 250 of each divider member 240 and may pass over an upper surface 252 of divider member 240. Exhaust flows 242 each have a slower velocity than initial exhaust flow 92.

Each divider member 240 may include a plate 244 having an opening 246 (FIGS. 2-3) defined therein. Opening 246 is in fluid communication with a portion 248 of initial exhaust flow 92. That is, opening 246 receives portion 248 of initial exhaust flow 92 that does not impact lower surface 250 of divider member 240 and flow radially. That is, portion 248 is any remainder of initial exhaust flow 92 that does not impact lower surface 250 of divider member 240 and that, as a result, has not yet flowed radially through structure 210.

As shown in FIG. 5, where multiple divider members 240A-B are used, each divider member 240 is spaced from an adjacent divider member. Each subsequent divider member, e.g., 240B, may include plate 244 having opening 246 defined therein, which is in fluid communication with a portion 248 of initial exhaust flow 92 not intercepted and directed radially outward by a previous, upstream divider member, e.g., 240A.

Structure 210 also includes a diverter member 260 operatively coupled relative to divider member(s) 240 to radially direct at least a portion of initial exhaust flow 92 exiting from exhaust flow source 212 radially towards divider member(s) 240 and eventually out of structure 210. As illustrated in FIGS. 2-4, diverter member 260 may include at least a section of a cone 262 extending into each opening 246 of divider member(s) 240. "At least a section of' cone 262 means a complete conical member or a frustoconical member (shown). Diverter member 260 may have other shapes and sizes and may be customized to impact and/or redirect initial exhaust flow 92 or portions thereof, in any desired manner.

As illustrated, an outer surface 264 of diverter member 260 is positioned in a spaced relation relative to an inner edge 266 of each opening 246 of divider member(s) 240. Portion(s) 248 of initial exhaust flow 92 passes through the space. A diameter of outer surface 264 of diverter member 260 and/or an inner diameter of opening 246 may be selected to create a desired size spacing. As shown in FIG. 5, where more than one divider member 240 is used, each subsequent, downstream opening, e.g., 246B, may have a smaller spacing than a previous, upstream opening, e.g., 246A, with diverter member 260. For example, outer surface 264 of diverter member 260 is positioned in a first spaced relation relative to inner edge 266A of opening 246A of upstream, divider member 240A, and outer surface 264 of diverter member 260 is positioned in a smaller, spaced relation relative to inner edge 266B of opening 246B of downstream, divider member 240B. Diverter member 260 may include, for example, a steel plate(s) shaped as shown. Diverter member 260 may be a single piece of material or a number of sections coupled together.

In certain embodiments, structure 210 may also include a cover member 270 operatively coupled to diverter member 260. Cover member 270 may support diverter member 260 therefrom, or diverter member 260 may be otherwise supported. Cover member 270 may be a single piece of material or a number of sections coupled together.

Structure 210 also includes a plurality of peripherally spaced, radially extending vanes 280 (hereinafter "vanes 280") positioned to further separate exhaust flows 242 into additional exhaust flows 282. Vanes 280 support divider member(s) 240 and diverter member 260 in a spaced, vertical relationship. Additional exhaust flows 282 may have a slower velocity than exhaust flows 242 but may also have the same velocity. As shown for example in FIG. 5, vanes 280 may be coupled between base member 222 and a lowermost divider member 240A (FIG. 5), between divider members 240A, 240B, and between an uppermost divider member 240B and diverter member 260 or cover member 270. Vanes 280 may be vertically aligned (as shown) or circumferentially offset within structure 210.

Vanes 280 extend radially, i.e., they are not circumferentially extending elements, but have a radial extent. As shown in FIGS. 2-4, vanes 280 may be planar plates, which may be flat (FIG. 2) or curved (FIG. 3). For instance, as shown in FIG. 3, vanes 280 may include a curved surface 284 in the form of a curved plate. However, as shown in FIG. 5, each of vanes 280 may include a curved surface 284 to redirect the respective additional exhaust flows 282 in a non-radial direction relative to initial exhaust flow 92, i.e., to redirect additional exhaust flows 282 from a radial direction to a non-radial direction relative to initial exhaust flow source 212. For instance, vanes 280 may include a curved surface 284 in the form of an airfoil, e.g., made of a number of sidewalls. Vanes 280 may include any form of curved surfaces 284 to impart a direction to additional exhaust flows 282. The direction imparted can be in any non-radial direction desired.

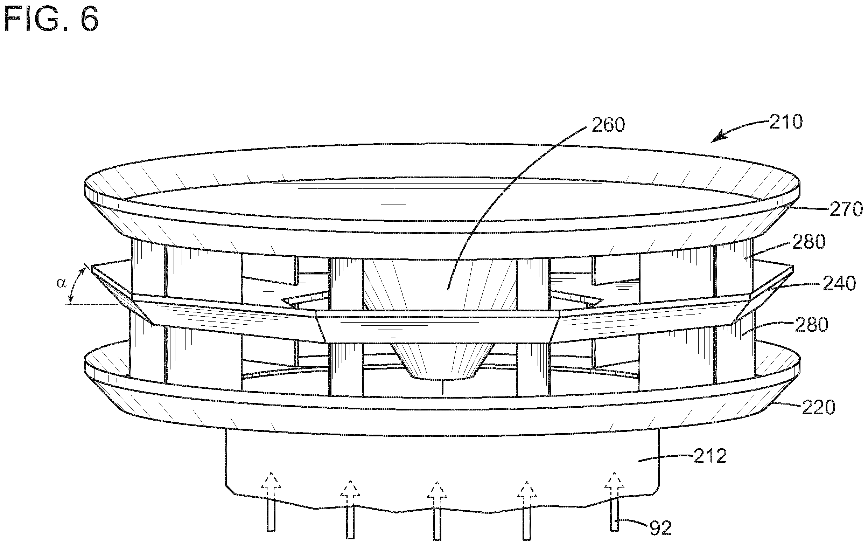

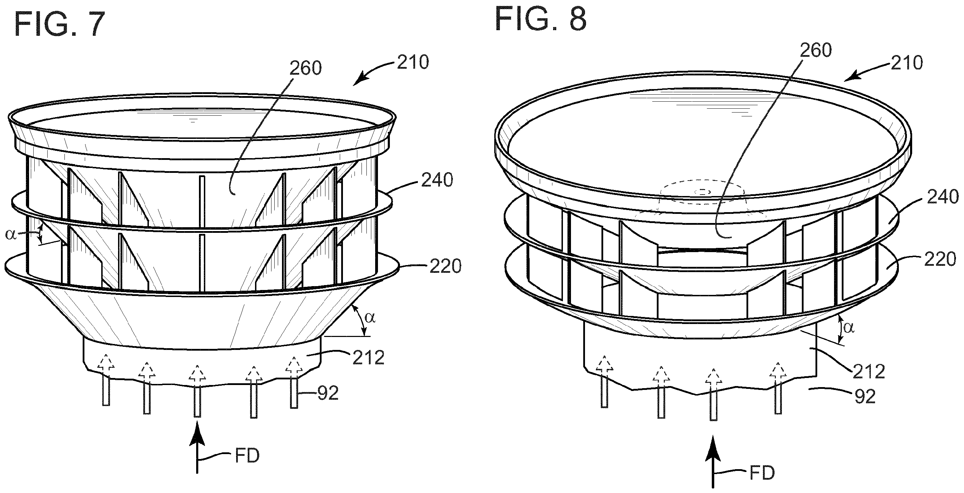

Referring to FIGS. 6-8, alternative embodiments of structure 210 are illustrated. As shown, in certain embodiments, divider member(s) 240 can be positioned at a non-perpendicular angle (α) relative to a flow direction (FD), e.g., vertically, of initial exhaust flow 92 exiting exhaust flow source 212 to direct at least one of exhaust flows 242 at the non-perpendicular angle (α) relative to flow direction (FD) of initial exhaust flow 92 exiting exhaust flow source 212. As observed by comparing FIGS. 6-7, non-perpendicular angle (α) may be user selected. In FIG. 6, for example, non-perpendicular angle (α) may be approximately 45°; and in FIG. 7, it may be approximately 60°. Any non-perpendicular angle (α) may be employed to create the desired flow direction for additional exhaust flows 282 as they exit structure 210. In the alternative or in addition thereto, as shown in FIG. 8, divider member(s) 240 may be curved (e.g., upwardly) to direct additional exhaust flow(s) 282 at non-perpendicular angle (α) relative to flow direction FD of initial exhaust flow 92 exiting exhaust flow source 212. The curvature can be customized to create the desired flow direction and/or velocity of exhaust flows 282.

Embodiments of structure 210 provide reduction of plume flow velocity (momentum) and/or temperature by mixing/diffusing initial exhaust flow 92 in the larger volume of surrounding ambient air thereby controlling the plume rise, velocity and buoyancy effects. Structure 210 can be customized to meet requirements for any desired governmental regulations, e.g., CASA regulations.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" as applied to a particular value of a range applies to both end values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. An exhaust plume control structure (210), comprising:
a mounting member (220) configured to mount to an exhaust flow source (212);
at least one divider member (240) operatively coupled to the mounting member (220) and positioned in fluid communication with an initial exhaust flow (92) exiting from the exhaust flow source (212); and
a diverter member (260) operatively coupled relative to the at least one divider member (240) to radially direct at least a portion (248) of the initial exhaust flow (92) exiting from the exhaust flow source (212) radially towards the at least one divider member (240), each divider member (240) separating the initial exhaust flow (92) into a plurality of exhaust flows (242, 282); and
a plurality of peripherally spaced, radially extending vanes (280, 282) positioned to separate each of the plurality of exhaust flows (242, 282) into a plurality of additional exhaust flows (242, 282),
each of the plurality of additional exhaust flows (242, 282) having a slower velocity than the initial exhaust flow (92).

2. The exhaust plume control structure (210) of claim 1, wherein each divider member (240) includes a plate (244) having an opening (224, 246) defined therein in fluid communication with a portion (248) of the exhaust flow source (212), wherein the diverter member (260) extends into each opening (224, 246) to radially direct a remaining portion (248) of the exhaust flow (242, 282) from the exhaust flow source (212) across each divider member (240).

3. The exhaust plume control structure (210) of claim 2, wherein the diverter member (260) includes at least a section of a cone (262), the at least a section of the cone (262) extending into each opening (224, 246), wherein an outer surface (264) of the diverter member (260) is positioned in a spaced relation relative to an inner edge (266) of each opening (224, 246).

4. The exhaust plume control structure (210) of claim 2, further comprising a cover member (270) operatively coupled to the diverter member (260).

5. The exhaust plume control structure (210) of claim 2, wherein the at least the section of the cone (262) includes a frustoconical member (270).

6. The exhaust plume control structure (210) of claim 1, wherein each of the plurality of peripherally spaced vanes (280, 282) includes a curved surface (284) to redirect the plurality of additional exhaust flows (242, 282) in a non-radial direction relative to the exhaust flow source (212).

7. The exhaust plume control structure (210) of claim 1, wherein the at least one divider member (240) is at least one of:
positioned at a non-perpendicular angle relative to a flow direction of the initial exhaust flow (92) exiting the exhaust flow source (212) to direct at least one of the plurality of exhaust flows (242, 282) at the non-perpendicular angle relative to the flow direction of the initial exhaust flow (92) exiting the exhaust flow source (212); and
curved to direct at least one of the plurality of exhaust flows (242, 282) at the non-perpendicular angle relative to the flow direction of the initial exhaust flow (92) exiting the exhaust flow source (212).

8. The exhaust plume control structure (210) of claim 1, wherein each divider member (240) includes a plurality of plate (244) sections having the opening (224, 246) defined thereby.

9. The exhaust plume control structure (210) of claim 1, wherein the mounting member (220) includes a base member (220, 222) having an opening (224, 246) therein and a mounting extension (226) extending from the base member (220, 222), the mounting extension (226) configured for coupling to the exhaust flow source (212).

10. The exhaust plume control structure (210) of claim 1, wherein the exhaust flow source (212) includes an exhaust stack of a power generating plant (94).

11. A power generating plant (94), including:
a power generating system (100), the power generating system (100) creating an initial exhaust flow (92);
a stack configured to direct the initial exhaust flow (92) to the atmosphere (214); and
an exhaust plume control structure (210), including:
a mounting member (220) configured to mount to the stack;
at least one divider member (240) operatively coupled to the mounting member (220) and positioned in fluid communication with the initial exhaust flow (92) from the stack; and
a diverter member (260) operatively coupled relative to the at least one divider member (240) to radially direct at least a portion (248) of the initial exhaust flow (92) exiting from the stack radially towards the at least one divider member (240), each divider member (240) separating the initial exhaust flow (92) into a plurality of exhaust flows (242, 282); and
a plurality of peripherally spaced, radially extending vanes (280, 282) positioned to separate each of the plurality of exhaust flows (242, 282) into a plurality of additional exhaust flows (242,282),
wherein each of the plurality of additional exhaust flows (242, 282) having a slower velocity than the initial exhaust flow (92).

12. The power generating plant (94) of claim 11, wherein each divider member (240) includes a plate (244) having an opening (224, 246) defined therein in fluid communication with a portion (248) of the exhaust flow source (212), wherein the diverter member (260) extends into each opening (224, 246) to radially direct a remaining portion (248) of the initial exhaust flow (92) from the exhaust flow source (212) across each divider member (240).

13. The power generating plant (94) of claim 11, wherein the diverter member (260) includes at least a section of a cone (262) extending into each opening (224, 246), wherein an outer surface (264) of the diverter member (260) is positioned in a spaced relation relative to an inner edge (266) of each opening (224, 246).

14. The power generating plant (94) of claim 11, further comprising a cover member (270) operatively coupled to the diverter member (260).

15. The power generating plant (94) of claim 11, wherein the at least the section of the cone (262) includes a frustoconical member (270).
